Europäisches Patentamt

European Patent Office

Office européen des brevets

(11) Publication number : **0 499 452 A1**

# (12) EUROPEAN PATENT APPLICATION

(21) Application number : **92301142.3**

(22) Date of filing : **12.02.92**

(51) Int. Cl.$^5$ : **B23K 35/26, C22C 13/02**

(30) Priority : **13.02.91 GB 9103018**

(43) Date of publication of application :
**19.08.92 Bulletin 92/34**

(84) Designated Contracting States :
**DE ES FR GB IT SE**

(71) Applicant : **LANCASHIRE FITTINGS LIMITED**
**Lancashire Fittings Science Village, Claro**
**Road**
**Harrogate North Yorkshire HG1 4AF (GB)**

(72) Inventor : **Pollard, G. c/o School of Materials**
**University of Leeds**
**Leeds LS2 9JT West Yorkshire (GB)**
Inventor : **Tomkings, A.B. Schoolof Materials**
**University of Leeds**
**Leeds LS2 9JT West Yorkshire (GB)**

(74) Representative : **Billington, Lawrence Emlyn**
**Haseltine Lake & Co Hazlitt House 28,**
**Southampton Buildings Chancery Lane**
**London WC2A 1AT (GB)**

(54) **Lead-free soft solder for stainless steel.**

(57)    A solder for stainless steel is an alloy having a composition by weight of 3 to 7% bismuth, 0 to 3% zinc, 0 to 3% silver and the balance being tin. The solder has a low melting temperature and may be used in conjunction with non-chloride fluxes.

EP 0 499 452 A1

This invention relates to the soldering of stainless steel components and more particularly, but not exclusively, is concerned with the soldering of stainless steel piping to provide an effective plumbing joint.

In the past, plumbing joints were made by soldering lead piping with a lead/tin based solder. The word plumbing comes from the Latin word plumbum meaning lead. Lead has long been known for its toxic effects and lead piping has largely been eradicated. Recently concern has grown over the use of lead in soldered joints. Galvanic couples may be set up in water systems between the pipe-work and the soldered joints. The galvanic effect can give rise to the leaching of lead into the water, especially in newly plumbed systems and in soft acidic waters, and in potable waters this is obviously undesirable. The use of lead/tin solders was convenient for many reasons. They have a solidus at 183°C giving them adequate strength at the normal maximum service temperature of 100°C. The eutectic composition (61.9Sn - 38.1Pb) is entirely liquid above 183°C but non-eutectic compositions can be made with a wide melting range or pasty range. Pasty solders can be easier to work with in difficult joints. Lead/tin solders wet material surfaces well and, compared to some alternatives, are cheap.

Alternative lead-free solders are commercially available, as will be seen, but they all have higher solidus temperatures than the lead/tin solders and this can present problems. In most plumbing applications copper piping is used but sometimes stainless steel pipework is used for its attractive and durable appearance. Using conventional lead/tin solders, and a little care, stainless steel can be easily joined. Because of the highly stable and tenuous chromia layer which forms on stainless steel, acid fluxes are recommended. These are normally based on hydrochloric acid and it is essential that the joint is carefully cleaned after being made. This is because stainless steel is susceptible to intergranular corrosion in chloride containing environments. In plumbed joints the outside of the pipe is easily cleaned but the inside of the pipe is inaccessible and flux residues in pipes can cause severe corrosion. It is therefore recommended that non-corrosive fluxes are used for such joints. At Lancashire Fittings a non-corrosive flux known as "lo-melt" is produced and marketed. This flux works well with lead/tin solders on stainless steel and is a successful product.

When "Lo-melt" flux has been tested with conventional lead-free solders it has, however, proved impossible to make a good joint. At the higher temperatures at which these solders melt the flux starts to fail. It has been suggested that the flux is polymerising at these higher temperatures. A considerable amount of work has been done already on developing this flux and it is considered that there is no room for improvement of its high temperature properties.

It is thus an object of the present invention to provide a lead-free solder with a melting point close to that of the lead-tin solders, that is, preferably in the range of 170-190°C.

According to the present invention there is provided an alloy, for soldering stainless steel, having a composition by weight of 3-7 percent bismuth, 0 to 3 percent zinc, 0 to 3 percent silver and the balance being tin, impurities and incidental elements.

In accordance with a preferred embodiment the alloy contains of 3.5 - 6.5 percent bismuth, 0 - 1.5 percent zinc, and 1 -2.5 percent silver. Advantageously the alloy contains 5% bismuth, 1% zinc, and 1.5% silver.

Alloys according to the present invention may be used in conjunction with a non-corrosive, non-chloride flux (such as "Lo-melt" flux) and may be used, for example, in obtaining effective watertight joints in stainless steel pipework wherein the joint has a satisfactory mechanical strength and in that the resistance to corrosion of the solder/flux system is comparable to known systems in which a tin/lead solder is used.

Alloys according to the present invention may provide an effective joint for stainless steel piping, more specifically it may be used for 304 type stainless steel and 316 type stainless steel.

For a better understanding of the invention and to show how the same may be carried into effect, reference will now be made, purely by way of example, to the accompanying drawings in which:-

Figure 1 shows the variation of liquidus and solidus temperatures with bismuth content for alloys containing tin plus 1.5% silver;

Figure 2 shows the same for alloys containing tin plus 2% silver;

Figure 3 shows the same for alloys containing tin plus 1% zinc and 1.5% silver;

Figure 4 shows the same for alloys containing tin, 1% zinc and 2% silver;

Figures 5-8 show the variation in area of spread against bismuth content for the alloys shown in Figures 1-4.

Experiments were carried out to determine melting ranges, to test the spreadability of alloys on coupons, to determine solderability in capillary joints, to obtain the mechanical strengths of such soldered joints and to study the metallography of the joints and alloys.

The melting ranges of the invention were determined using differential thermal analysis (DTA)./

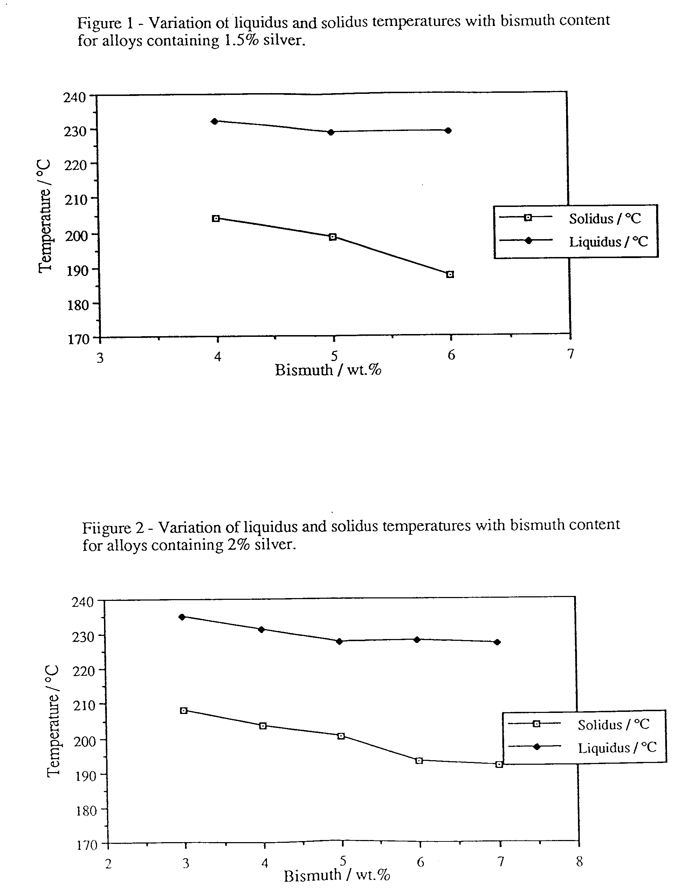

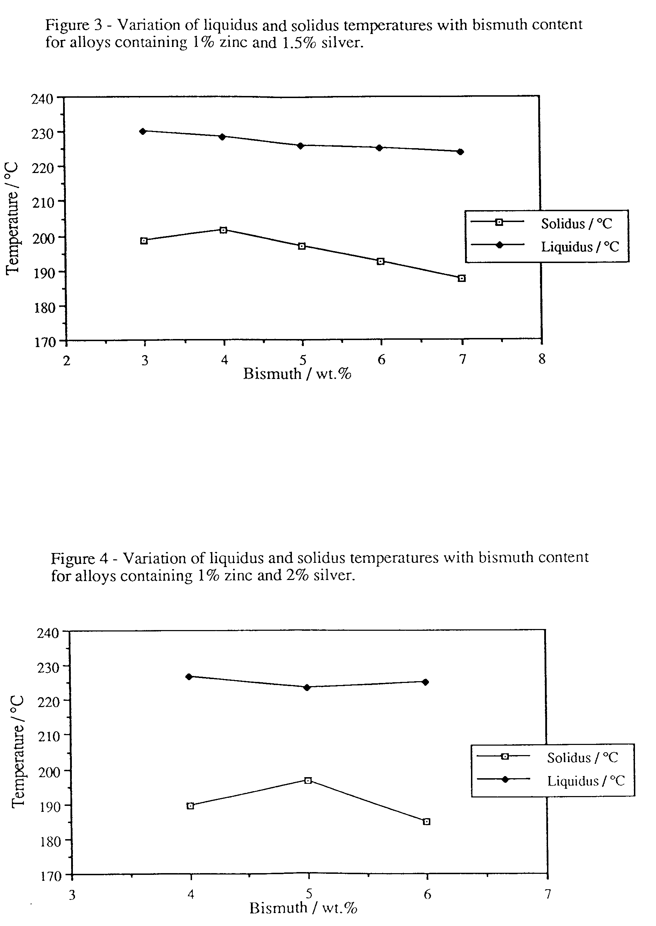

The results are given in table 1. In figures 1 to 4 the variations with bismuth content at constant zinc and silver contents are shown graphically. With the exceptions of two data points the graphs show a lowering of the solidus temperature with increasing bismuth content. The liquidus temperature is more level but there is a slight decrease with increasing bismuth content. From these results it might be felt that a level of 6 or even 7% bismuth might be more appropriate than the suggested 5%. These results must, however, be considered in conjunction with the spreadability tests below.

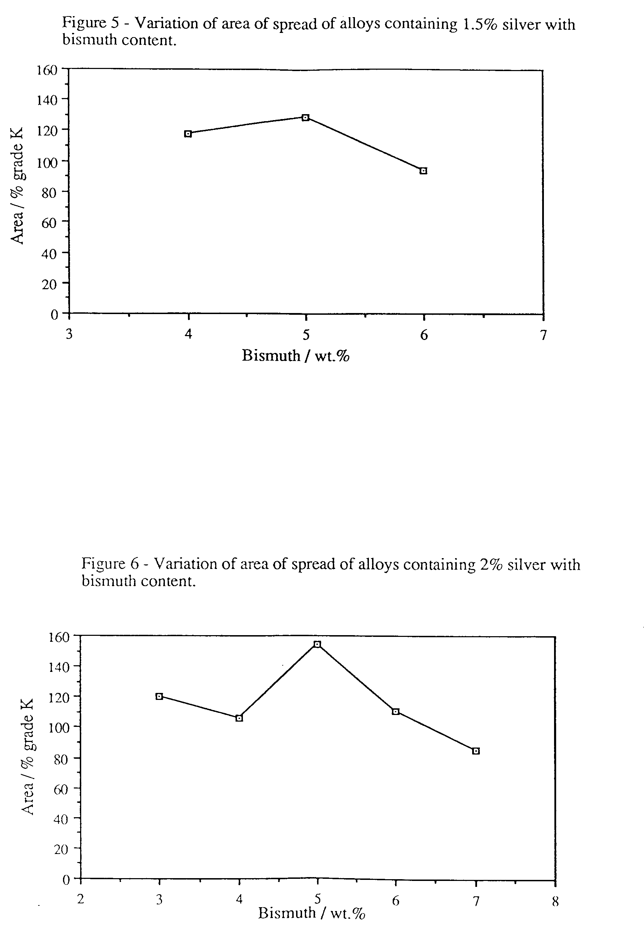

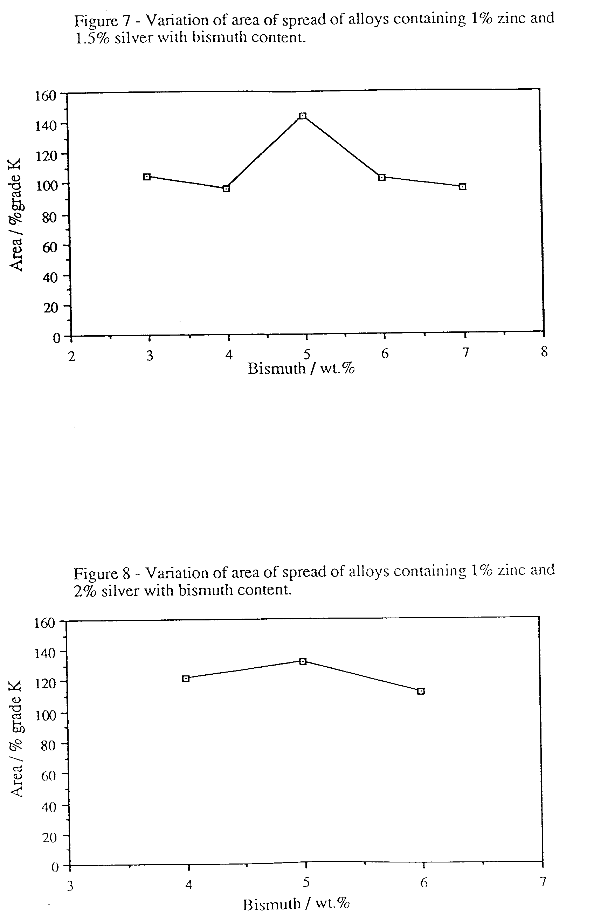

The invention was tested for spreadability. The areas of spread of these tests, taken as the mean of five measurements, are given in table 2. The areas are also expressed as a percentage of the area achieved by grade K solder, viz 60% tin and 40% lead. In figures 5 to 8 these data have been combined with previously obtained spreadabilities to show graphically the variation of spreadability with bismuth content.

In all of the figures 5 to 8 the maximum in the area of spread occurs at 5% bismuth, suggesting very strongly that this is the optimum level. If the bismuth content is varied to lower levels then there is in most cases a smaller drop in the area of spread than at higher levels. From the melting range determinations reported above the most desirable direction in which to vary the bismuth content is upwards. Thus, although the melting range at 6 or 7% bismuth might be better the best balance between spreadability and melting range is at 5% bismuth.

The following two embodiments of the invention, Sn-5Bi-2Ag and Sn-5Bi-1Zn-1.5Ag were tested for solderability in capillary joints. For these tests two lengths of 15 mm diameter tube were joined using a straight capillary joint fitting and using Lo-melt flux. The joints made were then sectioned longitudinally to give four sections through joints. These sections were ground and polished and were then measured under a low magnification microscope to determine the percentage of the capillary filled by solder. An average measurement was taken from the four sections. The results obtained were good. The average taken over four readings was for the 93Sn-5Bi-2Ag alloy 60% and for the 92.5Sn-5Bi-1Zn-1.5Ag alloy 65%. The slightly better fill achieved for the 92.5Sn-5Bi-1Zn-1.5Ag alloy has implications for the strength of the joints, as will be seen.

For mechanical testing, lengths of 15 mm diameter tube were joined with straight capillary joints using the two alloys, 93Sn-5Bi-2Ag and 92.5Sn-5Bi-1Zn-1.5Ag and Lo-melt flux. Joints made with the two alloys were tested at room temperature and approximately 100°C in the as-made condition and after being held at 100°C for 13 days. A Mayes tensile testing machine was used to test the joints at a crosshead speed of 10 mm/min. The maximum load achieved was recorded in each case and a notional shear stress calculated.

The maximum loads achieved are given in table 3 along with the calculated notional shear stress and comments regarding the fill of the joints tested. As might be expected the strengths at 100°C were consistently low compared with those obtained at room temperature. When the estimated degree of joint fill is taken into account there appears to be little effect of aging on the strengths of the joints. The most important factor influencing the strengths of the joints is the fill of the joints. The results seen here are consistent with those above where the alloy 92.5Sn-5Bi-1Zn-1.5Ag gave the best joint fill.

The two alloys, Sn-5Bi-2Ag and Sn-5Bi-1Zn-1.5Ag, and capillary joints made with them were examined metallographically. Photomicrographs were taken and the phases observed were characterised using a scanning electron microscope.

Metallographic examination of the two alloys, 93Sn-5Bi-2Ag and 92.5Sn-5Bi-1Zn-1.5Ag showed them both to have a three phase structure. In both cases the major phase was tin. The tin grains were cored and EDAX analysis showed the grain edges to have a considerably higher bismuth content. There were two secondary phases. The first of these was mainly silver (with traces of zinc where present in the alloy) with a grain size up to about 15 μm lying between the tin grains. The second minor phase was bismuth. This had a very fine grain size (about 1 μm) and appeared to be part of a eutectic mixture being concentrated in small clusters of grains at the tin dendrite boundaries. The structures of the alloys in the capillary joints appeared to be similar but on a finer scale.

Several embodiments of the invention were subjected to compositional analysis to ensure that the real composition was approximate to the nominal composition. The characterisation was carried out using inductively coupled plasma - atomic emission spectroscopy (ICP-AES). For this measured amounts of the alloys were dissolved in aqueous solution and compared with known standard solutions by AES. The bismuth, zinc and silver contents were measured and the tin assumed to make up the difference. Six alloys were analysed: two melts each of the nominal compositions 93Sn-5Bi-2Ag and 92.5Sn-5Bi-1Zn-1.5Ag and one melt each of the nominal compositions 94Sn-4Bi-2Ag and 93.5Sn-4Bi-1Zn-1.5Ag. The results are summarised in table 4. The accuracy of the results are better than 1%. Only one of the real compositions deviates from the nominal composition by an appreciable amount and consequently these results were felt to be satisfactory. Since the results were so good it was felt that the nominal compositions of all the alloys described herein are a good representation of the actual compositions.

From the melting range determinations it might be suggested that any alloy with 5% bismuth or more and 1% or more zinc might be appropriate as a lead-free solder. By contrast the spreadability tests suggest that the alloy should contain 5% or less bismuth, 0-1% zinc and 1.5-2% silver. It is necessary to achieve a balance between these two requirements and a composition of tin with 5% bismuth, 0-1% zinc and 1.5-2% silver appears to achieve this balance. Solderability testing in capillary joints suggests that the 92.5Sn-5Bi-1Zn-1.5Ag alloy is marginally better than the 93Sn-5Bi-2Ag alloy. These alloys are three phase, both in the as-cast condition and in joints, and appear to have some ductility (probably sufficient to be able to produce them as a wire on a reel). The alloys have good strength in a capillary joint as long as a good fill is achieved.

A preferred compositional range for the alloy is 4-6% bismuth, 0-1% zinc and 1.5-2% silver with the balance being tin, impurities and incidental elements.

The invention is, however, in no way restricted to the above mentioned preferred levels and neither is it restricted to the purpose of soldering stainless steel pipes but may be applied to any use for which a metal with a low melting point is required, whether or not the absence of lead is specified and whether or not good mechanical strength is a prerequisite.

Table 1 - Melting ranges as determined by differential thermal analysis (DTA). Temperatures given are the mean taken from three readings and the figures in parentheses are the standard deviations.

| Alloy composition / wt.% | | | | Temperatures / °C | |
|---|---|---|---|---|---|
| Sn | Bi | Zn | Ag | Solidus | Liquidus |
| 94 | 4 | - | 2 | 203.6 (9.1) | 231.1 (0.6) |
| 92 | 6 | - | 2 | 193.0 (2.7) | 228.1 (0.6) |
| 93.5 | 4 | 1 | 1.5 | 201.4 (1.3) | 228.5 (1.1) |
| 91.5 | 6 | 1 | 1.5 | 192.2 (2.9) | 225.2 (0.0) |
| 93 | 4 | 1 | 2 | 189.6 (2.9) | 226.7 (0.6) |
| 91 | 6 | 1 | 2 | 185.0 (7.6) | 225.2 (1.1) |
| 94.5 | 4 | - | 1.5 | 204.0 (1.2) | 232.2 (0.6) |
| 92.5 | 6 | - | 1.5 | 187.6 (7.7) | 228.9 (0.6) |
| 94.5 | 3 | 1 | 1.5 | 198.7 (4.6) | 230.0 (0.6) |
| 90.5 | 7 | 1 | 1.5 | 187.3 (1.7) | 223.7 (0.6) |
| 95 | 3 | - | 2 | 208.1 (1.7) | 232.5 (0.6) |
| 91 | 7 | - | 2 | 191.9 (0.6) | 227.0 (0.6) |
| 96 | 3 | - | 1 | 210.0 (4.2) | 235.8 (1.2) |
| 89.5 | 7 | 2 | 1.5 | 190.4 (2.0) | 223.4 (0.6) |

Table 2 - The results of spreadability testing of alloys on stainless steel coupons. the areas of spread are given in mm$^2$ and as a percentage of the area achieved by grade K solder.

| Alloy composition / wt.% | | | | Area of spread / mm$^2$ | Proportion of area achieved by Grade K / % |
|---|---|---|---|---|---|
| Sn | Bi | Zn | Ag | | |
| 94.5 | 3 | 1 | 1.5 | 985 | 104 |
| 90.5 | 7 | 1 | 1.5 | 911 | 96 |
| 95 | 3 | - | 2 | 1136 | 120 |
| 91 | 7 | - | 2 | 803 | 85 |
| 96 | 3 | - | 1 | 1366 | 144 |
| 89.5 | 7 | 2 | 1.5 | 1043 | 110 |

Table 3 - Tensile strength and notional shear stresses for the two alloys tested at two temperatures (R.T. = room temperature) and in two conditions (Aged = held at 100 °C for 13 days). An estimate of the degree of joint fill has also been included. This is on a five point scale (poor, fair, good, very good, excellent).

| Alloy composition / wt.% | | | | Condition | Joint fill | Test temperature / °C | Strength / kN | Notional shear stress / MPa |
|---|---|---|---|---|---|---|---|---|
| Sn | Bi | Zn | Ag | | | | | |
| 92.5 | 5 | 1 | 1.5 | As made | Good | R.T. | 9.6 | 15.7 |
| 92.5 | 5 | 1 | 1.5 | As made | Fair | 100 | 3.38 | 5.98 |
| 92.5 | 5 | 1 | 1.5 | Aged | Good | R.T. | 14.1 | 23.9 |
| 92.5 | 5 | 1 | 1.5 | Aged | Fair | 100 | 3.38 | 5.52 |
| 93 | 5 | 0 | 2 | As made | Fair | R.T. | 3.25 | 5.31 |
| 93 | 5 | 0 | 2 | As made | Poor | 100 | 1.38 | 2.25 |
| 93 | 5 | 0 | 2 | Aged | Poor | R.T. | 2.88 | 4.89 |
| 93 | 5 | 0 | 2 | Aged | Fair | 100 | 4.63 | 7.86 |

Table 4 - Results of compositional analysis of alloys.

| Nominal alloy composition / wt.% | | | | Actual alloy composition / wt.% | | | |
|------|------|------|------|------|------|------|------|
| Sn | Bi | Zn | Ag | Sn | Bi | Zn | Ag |
| 93 | 5 | 0 | 2 | Bal. | 4.84 | n.d. | 2.01 |
| 92.5 | 5 | 1 | 1.5 | Bal. | 4.33 | 0.97 | 1.51 |
| 93 | 5 | 0 | 2 | Bal. | 4.97 | n.d. | 2.14 |
| 92.5 | 5 | 1 | 1.5 | Bal. | 4.78 | 0.98 | 1.46 |
| 94 | 4 | 0 | 2 | Bal. | 3.99 | n.d. | 2.04 |
| 93.5 | 4 | 1 | 1.5 | Bal. | 3.87 | 0.93 | 1.51 |

**Claims**

1. An alloy, for soldering stainless steel, having a composition by weight of 3 to 7 percent bismuth, 0 to 3 percent zinc, 0 to 3 percent silver and the balance being tin, impurities and incidental elements.

2. An alloy, according to claim 1 having a composition by weight of 3.5 to 6.5 percent bismuth, 0 to 1.5 percent zinc, 1 to 2.5 percent silver and the balance being tin, impurities and incidental elements.

3. An alloy, according to claim 2 in which the amount of bismuth is 5%, the amount of zinc is 1% and the amount of silver is 1.5%.

4. An alloy according to any previous claim having a solidus temperature below 211°C and a liquidus temperature in the range 223°C to 236°C.

5. An alloy according to any previous claim having a solidus temperature below 202°C and a liquidus temperature in the range 225°C to 229°C.

6. A method of soldering stainless steel comprising the step of using, as the solder, an alloy as claimed in any one of the preceding claims.

7. A method according to claim 6 and comprising the additional step of using a non-corrosive non-chloride flux.

8. A method according to claim 6 or 7 wherein the method is used to produce a watertight joint in stainless steel pipework.

9. A method according to any one of claims 6 to 8 wherein the stainless steel is Type 304 or Type 316.

Figure 1 - Variation of liquidus and solidus temperatures with bismuth content for alloys containing 1.5% silver.

Fiigure 2 - Variation of liquidus and solidus temperatures with bismuth content for alloys containing 2% silver.

Figure 3 - Variation of liquidus and solidus temperatures with bismuth content for alloys containing 1% zinc and 1.5% silver.

Figure 4 - Variation of liquidus and solidus temperatures with bismuth content for alloys containing 1% zinc and 2% silver.

Figure 5 - Variation of area of spread of alloys containing 1.5% silver with bismuth content.

Figure 6 - Variation of area of spread of alloys containing 2% silver with bismuth content.

Figure 7 - Variation of area of spread of alloys containing 1% zinc and 1.5% silver with bismuth content.

Figure 8 - Variation of area of spread of alloys containing 1% zinc and 2% silver with bismuth content.

EP 0 499 452 A1

| European Patent Office | EUROPEAN SEARCH REPORT | Application Number |
| --- | --- | --- |
| | | EP 92 30 1142 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
| --- | --- | --- | --- |
| X | EP-A-0 336 575 (COOKSON GROUP) 11 October 1989 <br> * claims 1,3,5; table 1 * <br> --- | 1,4,6 | B23K35/26 <br> C22C13/02 |
| X | EP-A-0 144 998 (ALLIED CORP.) 19 June 1985 <br> * table 1 * <br> --- | 1 | |
| X | GB-A-131 299 (S.A.DES LAMINOIRS ET CABLERIE) 10 March 1921 <br> * page 2, line 6 - line 12; claims 1,7 * <br> --- | 1 | |
| X | DE-C-913 238 (R.VOGEL) 10 June 1954 <br> * page 1, line 18 - line 28 * <br> --- | 1,2 | |
| A | US-A-4 879 096 (P.E.NATON) 7 November 1989 <br> --- | | |
| A | US-A-4 806 309 (S.TULMAN) 21 February 1989 <br> --- | | |
| A | PATENT ABSTRACTS OF JAPAN <br> vol. 9, no. 55 (M-362)(1778) 9 March 1985 <br> & JP-A-59 189 096 ( SENJIYU KINZOKU KOGYO ) 26 October 1984 <br> * abstract * | | TECHNICAL FIELDS SEARCHED (Int. Cl.5 ) <br><br> B23K <br> C22C |
| | ----- | | |

The present search report has been drawn up for all claims

| Place of search | Date of completion of the search | Examiner |
| --- | --- | --- |
| THE HAGUE | 27 MAY 1992 | MOLLET G.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P0401)

11